# EUROPEAN PATENT APPLICATION

(11) **EP 0 662 657 A1**
(43) Date of publication of application: **12.07.1995**
(21) Application number: 94309767.5
(22) Date of filing: 23.12.1994
(51) Int. Cl.: G06F 5/01

(54) **Barrel shifter with bi-directional multiplexer circuit**

(30) Priority: 06.01.1994 US 177893
(71) Applicant: TEXAS INSTRUMENTS INCORPORATED, Dallas, Texas 75243 (US)
(72) Inventor: Mahani-Shetti, Shivaling, c/o Texas Instrument Inc, Dallas TX 75243 (US); Muthukrishnan, Sanker, c/o Texas Instrument Inc., Dallas TX 75243 (US)
(74) Representative: Brown, Angela Mary

(57) **Abstract**

Barrel shifter circuit (10) shifts the bit positions of a digital signal. The digital signal flows through barrel shifter circuit (10) along first path (14, 16, and 20, 30, 40 64, 76, 34 36, and 18) for shifting the bit position of the digital signal in a first direction. The directing circuitry (16 and 18) alternatively directs the digital signal through barrel shifter circuit (10) in second path (14, 16, 22, 34, 76, 64, 48, and 46) if the bit position of the digital signal is to be shifted in a second direction. The first direction may be, for example, a left barrel shift operation, while the second direction may be a right barrel shift operation.

## Description

### TECHNICAL FIELD OF THE INVENTION

The present invention generally relates to integrated circuits and, more particularly, to a barrel shifter with a bi-directional multiplexer circuit for performing barrel shifting of digital signal bit positions.

### BACKGROUND OF THE INVENTION

Barrel shifters have been widely used in computers for shifting the contents of a register by a selected number of places to the right or left. Barrel shifters are often used as components of arithmetic logic units (ALUs) to assist in performing ALU operations. Barrel shifters, however, conventionally require a substantial amount of hardware and considerable routing resources and board space of the associated integrated circuit.

The hardware requirements are seen by the following example. Conventional barrel shifters consist of a circuit to optionally flip the data order, a one-directional shifter, and a second flipper. Digital signals pass through the logic core of a barrel shifter for shifting the bit position by a predetermined amount. Known barrel shifter implementations, shift the bit positions by the predetermined amount in only one direction. For example, a conventional barrel shifter may shift the bit positions of a digital signal from left to the right. If a right-to-left shift is desired, the known barrel shifter includes flipper circuits for flipping the order of the bits of the digital sign. By flipping the order the data in the most significant bit (MSB) of a word goes to the least significant bit (LSB) position, and vice-versa. Once flipped, the digital signal passes through the logic core to be shifted from the left to the right. Then, another flipper circuit flips the shifted digital signal back to the original order. The result is a word or other signal segment whose data bits are shifted the right to the left by the degree of shifting that the originally-configured left-to-right unidirectional barrel shifter performs.

This configuration is expensive and requires considerable routing resources. These routing resources within each flipper circuits are necessary to direct the bits to their flipped positions. The routing resources that this approach requires generally even exceed the routing requirements for all the transistors associated with the logic core that does the shifting. These routing resources or leads for the flipper circuits consume considerable power and undesirably occupy valuable integrated circuit space.

Another approach is to use two logic cores, one for shifting the bit positions to the right and another for shifting the bit positions to the left. But this approach also consumes considerable circuit space.

### SUMMARY OF THE INVENTION

A need exists, therefore, for a more compact barrel shifter for digital signals that avoids the need for flipper circuits that consume extensive routing space in their design and power in their operation.

There is a further need for a method and apparatus for shifting the bit positions of digital signal that permits both right barrel shifting and left barrel shifting without the flipper circuit arrangement of known barrel swifter devices and without requiring two logic cores for shifting in two directions.

The present invention, accordingly, provides an improved digital signal barrel shifter for shifting digital signal bit positions that eliminates or substantially reduces limitations associated with known barrel shifting methods and devices.

According to one aspect of the present invention, there is provided a barrel shifter for shifting the bit position of digital signal that includes a single logic core for shifting the position of data bits in a word. Circuitry associated with the logic core directs the digital signal through the logic core along a first path for shifting the position of the data bits in a first direction and through the logic core along a second path for shifting the bit position of the digital signal in a second direction. For example, one embodiment of the invention provides bi-directional circuits that directs the flow of digital signal through the logic core along a first path to perform bit position barrel shifting in the left direction. The bi-directional circuitry, alternatively, routes the digital signal through the logic core along a second or reverse direction to barrel shift the bit position of the digital signal in the right direction.

According to a second aspect of the invention, there is provided a method for shifting the positions of bits in a digital signal, comprising the steps of directing the digital signal through the logic core along a first path for shifting the bit positions of the digital signal in a first direction and further directing the digital signal through the logic core along a second path for shifting the bit position of the data signal in a second direction; and shifting the bit positions of the digital signal using a single logic core.

According to a third aspect of the present invention, there is provided a method for forming a barrel shifter for shifting the positions of bits in digital signal, comprising the steps of: forming a logic core for shifting the bit position of the digital signal; and forming circuitry for directing the digital signal through the logic core along a first path for shifting the bit position of the digital signal in a first direction and further for directing the digital signal through the logic core along second path for shifting the bit position of the digital signal in a second direction.

A technical advantage of the present invention is that it eliminates the need for the flipper circuits that known barrel switches require. This eliminates the routing of leads within the flipper circuits and between flipper circuits and the logic core. As such, considerable space and power savings result from the present invention.

### BRIEF DESCRIPTION OF THE DRAWINGS

The invention and its modes of use and advantages are best understood by reference to the following Detailed Description of Illustrative Embodiments when read in conjunction with the accompanying drawings, wherein:
FIGURE 1 shows a schematic diagram of one embodiment of the present invention for shifting the bit positions one position to the left;
FIGURE 2 shows a schematic diagram of the FIGURE 1 embodiment for shifting one bit position to the right;
FIGURE 3 depicts the configuration of the FIGURE 1 embodiment for shifting the bit positions to the left; and
FIGURE 4 depicts the configuration of the present embodiment for shifting two bit positions to the right.

### DETAILED DESCRIPTION OF ILLUSTRATIVE EMBODIMENTS

Illustrative embodiments of the present invention are best understood by referring to the FIGUREs in which barrel shifter circuit 10 appears. Barrel shifter circuit includes A₀ input node 12 that receives A₀ bit of a digital signal that flows along line 14 to switch 16. Switch 16 is a gag switch which operates simultaneously with output switch 18. Input switch 16 may alternatively connect to line 20 or line 22. From line 20, the A₀ bit flows along line 24 through buffer transistor 26 to output switch 18. If output switch 18 is not selected to node 28, however, digital signal flow goes along line 30 to node 32. Additionally, if input switch 16 connects to line 22, digital signal flow may proceed along either line 32 or line 34. If input switch 16 connects to line 22, then, by virtue of its mutual operation with switch 16, output switch 18 selects to node 28 instead of node 36, thereby, causing flow to proceed along line 34.

In the present embodiment, the A-stage which consists of the inputs for the A₀, A₁, A₂, and A₃ bits, the B-stage that carries and shifts the resulting bit positions B₀, B₁, B₂, and B₃ the C-stage that carries the resulting bit positions C₀, C₁, C₂, and C₃ form a logic core that performs the desired two-direction barrel shift operations. To provide an understanding of how the logic core operates in a two-direction mode, the following discussion described connections and flow data in certain bit positions. Thus, from lines 30, the A₀ bit goes to node 38 which separates into line 40 and line 42. Lines 40 and 42 connect to the B-stage switch 44. Note that the above-described circuit pertains to the bit position A₀. Each of the other bit positions A₁, A₂, and A₃, have similar circuits associated with them so that, for example, along line 46 connections for bit position A₁ may go along line 48 or 50. Similarly, along line 52 bit position A₂ may proceed to line 54 or line 56 along line 58. A₃ bit may proceed along to lines 60 and 62.

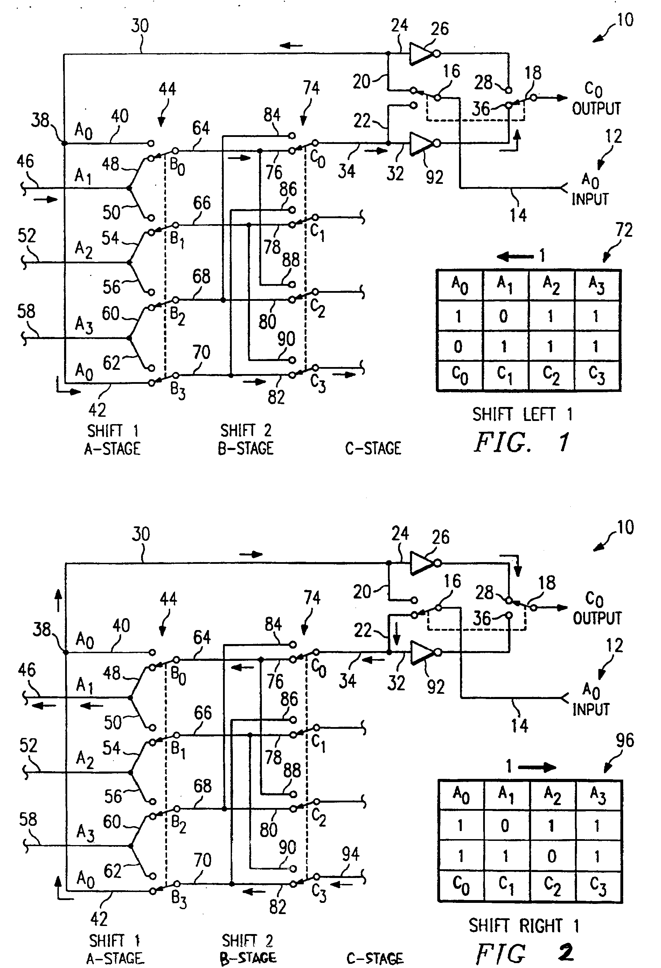

B-stage switch 44 provides connections from the A-stage line 30 for the A₀ bit position, line 46 for A₁ bit position, line 52 for the A₂ bit position, and line 58 for the A₃, respectively,to the B₀ line 64, B₁ line 66, B₂ line 68, and B₃ line 70. From A-stage to the B-stage, a shift of one bit may occur. For example, Table 72 of FIGURE 1 shows the results of a barrel shift of one position to the left.

Referring to both Table 72 and barrel shifting circuit 10, a shift to the left results in the value and bit position A₀ going to the A₃ bit position. Thus, as the A₀ input proceeds along line 30, because B-stage switch 44 does not connect to line 40 and, instead, connects to line 42, A₀ digital signal proceeds along the line 42 to B₃ line 70. Similarly, in moving to the left one bit position (1) the A₁ digital signal on line 46 proceeds through B-stage switch 44 to B₀ line 64 (2) the A₂ bit goes from line 52 through line 54 to the B₁ line 66, and (3) the bit on A₃ line 58 proceeds along line 60 to B₂ line 68. As a result, all of the bits in the word comprising A₀A₁A₂A₃ shift one position to the left so that, in Table 72, for example, the word 1011 becomes 0111 as a result of the barrel shift.

At the B-stage, the present embodiment permits shifting two or no bits. Thus, for example, if it is desired to only shift the A₀ input by one bit, then C-stage switch 74 is in position to connect to line 76 from B₀ line 64, line 78 from B₁ line 66, line 80 from B₂ line 68, and line 82 from B₃ line 70. Alternatively, if it were desired that a shift of two bit positions occur, then C-stage switch 74 would connect to line 84 from B₂ line 68 for the C₀ bit position, to line 86 from the B₃ line 70 to fill the C₁ bit position,to line 88 from B₀ line 64 to fill the C₂ bit position, and to line 90 from B₁ line 66 to fill the C₃ bit position.

Exiting barrel shifter circuit 10 proceeds the same for each of the C₀ through C₃ bit positions. Thus, for example, for the C₀ bit position 34 digital signal flow proceeds along line 30 through buffer 92 and on to node 36 of output switch 18. This C₀ bit position switch is in fact the data that appears as the input from input line 46 for the A₁ bit position.

FIGURE 2 illustrates a right barrel shift operation using the barrel shifter circuit 10 of FIGURE 1 with B-stage switch 44 and C-stage switch 74 in the same position as they appear in FIGURE 2. Input switch 16 and output switch 18, however, are switched to connect, respectively lines 22 and 24. As a result, as the A₀ bit position input flows along line 14 it proceeds through input switch 16 to lines 22. The flow proceeds, now in the opposite direction of the direction of FIGURE 1 along lines 34 to C-stage switch 74 and to lines 76. From line 76, digital signal flow proceeds not along path 88, but along line 64 to B-stage switch 44 to line 48 and on to A₁ bit position line 46. In similar fashion and flowing, again, in the opposite direction from that of FIGURE 1,the digital signal in bit position C₃ flows along line 94 to line 82. Flow proceeds not along line 86, but along line 70 to B-stage switch 44 to line 42 where it continues to A₀ line 30. Along line 30, digital signal flow proceeds through line 24 and buffer 26 to node 28 where it connects with output switch 18 to provide the C₀ output. The result, is a shift of one bit position to the right so that, for example, the value of 1 in bit position A₀ assumes A₁ bit position.

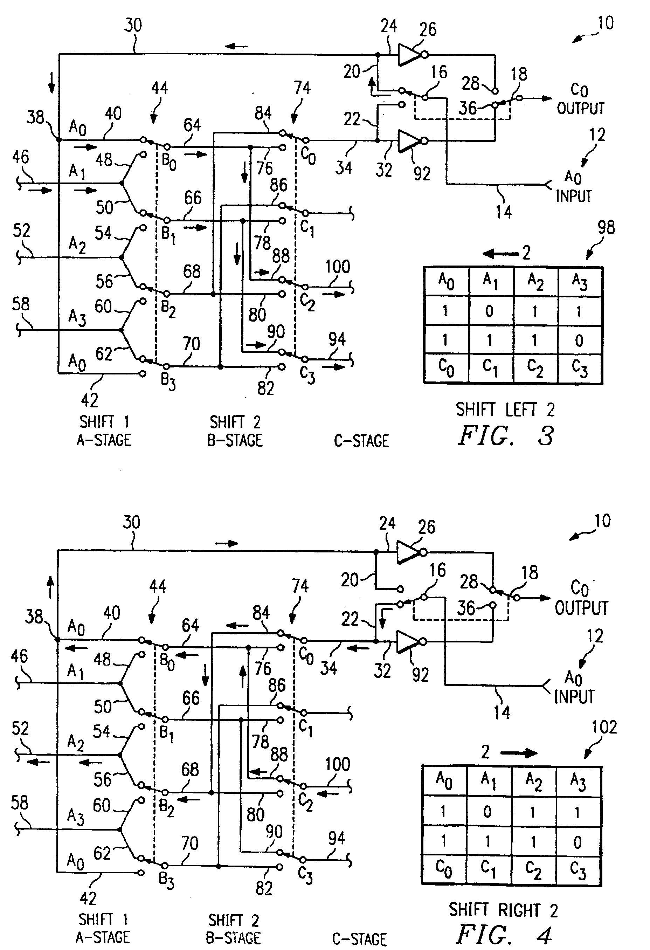

FIGURE 3 shows operation of barrel shift circuit 10 to perform a barrel shift operation of two bit positions. For example, at A₀ input node 12 the A₀ bit proceeds along line 14 to input switch 16 that connects to line 20 and onto line 30. Line 30 connects to B-stage switch 44 through line 40. At the B-stage, the A₀ bit is in the B₀ bit position on line 64 and proceeds along line 88 to the C₂ bit position for C-stage switch 74 and out to line 100. Likewise, from A₂ line 52 the value of the A₂ bit position proceeds along line 56 to B-stage switch 44 and B₂ line 68. From B₂ line 68, the data proceeds along line 84 to C-stage switch 74 at the C₀ bit position 34. The C₀ data proceeds along through buffer 92 to output node 36 where it flows through output switch 18. The result is a shift of two positions to the left.

FIGURE 4 shows further the bi-directional nature of barrel shifter circuit 10. Thus, for example, in shifting two bit positions to the right, A₀ input 12 proceeds along line 14 to input switch 16 which is now connected to lines 22. From line 22 the bit travels in the C₀ bit position through C-stage switch 74. C-stage switch 74 connects to line 84 that permits flow along B₂ line 68 to B-stage switch 44. The B₂ bit position connects to line 56 so that the data proceeds along line 52 output in the A₂ bit position. Likewise, from the C₂ line 100 data flows along line 88 and continues to B₀ line 64 to B-stage switch 44 at lines 40. From line 40, the A₀ bit proceeds along line 30 through to line 24 and buffer 26 to node 28. Node 28 connects to output switch 18 to provide B₀ output.

The present embodiment may be formed so a to barrel shift digital signal segments of greater than four bit position. Also, the various stages of the logic core may permit more than two bit position shifting for such longer digital signal segments. The present embodiment may be formed by a wide variety of established electronic circuit fabrication processes. One attractive technique for performing the switching within barrel shifter circuit 10 is a CMOS circuit that includes transistors for performing the necessary switching operations. These transistors may be implemented using a BiCMOS process.

A technical advantage of the present invention is that it eliminates the need for the flipper circuits that known barrel shifters require. This eliminates the routing of leads between flipper circuits and the logic core. As such, consider space and power savings result from the present invention.

Another technical advantage of the present embodiment is that it uses only one logic core to perform the desired bit position barrel shifting. This also eliminates the need for circuit space that such approaches require.

In summary, therefore, the present invention provides a method and apparatus for shifting the bit position of digital signal that includes a logic core for shifting the bit position of digital signal in a word. Circuitry associated with the logic core directs the digital signal through the logic core along a first path for shifting the position of the bit positions in a first direction (e.g., in the left direction) and through the logic core along a second path for shifting the bit position of the digital signal in a second direction (e.g., in the right direction). The present embodiment avoids the use of a second logic core and flipper circuits of the prior art. This results in substantial savings of valuable circuit design as well as substantial reduction in the routing requirements of conventional barrel-shifting devices.

Although the invention has been described with reference to the above specified embodiments, this description is not meant to be construed in a limiting sense. Various modifications of the disclosed embodiment, as well as alternative embodiments of the invention will become apparent to persons skilled in the art upon reference to the above description. It is, therefore, contemplated that the appended claims will cover such modifications that fall within the true scope of the invention.

## Claims

1. A barrel shifter for shifting the bit positions of the digital signal, comprising:
a logic core for shifting the bit position of the digital signal;
circuitry for directing the digital signals through said logic core along a first path for shifting the bit position of the digital signal in a first direction and further for directing the digital signal through the logic core along a second path for shifting the bit position of the digital signal in a second direction.

2. The barrel shifter of Claim 1, wherein said directing circuitry comprises input circuitry for permitting flow of digital signal along said first path to said logic core when shifting the bit position of digital signal in said first direction and that prohibits flow to the logic core along said second path when shifting the bit position of the digital signal in said first direction.

3. The barrel shifter of Claim 1, wherein said directing circuitry comprises multiplexer input circuitry for permitting flow of digital signal along said second path to said logic core when shifting the bit position of the data signals in said second direction and that prohibits flow to the logic core along said first path when shifting the bit positions in said second direction.

4. The barrel shifter of any preceding claim, wherein said logic core has two connections to an output multiplexer device and wherein a first one of said two connections permits output from said logic core when shifting the bit positions of the digital signal in said first direction and a second one of said two outputs permits flow from said logic core when shifting the bit position of the digital signal in said second direction.

5. The barrel shifter of any preceding claim, wherein said logic core comprises a four-bit barrel-shifter core for shifting data bits of a four-bit word.

6. The barrel shifter of any of claims 1 to 4, wherein said logic core provides two bits of barrel-shifting in a word having at least four data bits.

7. The barrel shifter of any preceding claim, wherein said directing circuitry further comprises a multiplexer circuit for receiving the digital signal from both said first path and said second path and producing a selected output therefrom.

8. A method for shifting the positions of bits in a digital signal, comprising the steps of:
directing the digital signal through the logic core along a first path for shifting the bit positions of the digital signal in a first direction and further directing the digital signal through the logic core along a second path for shifting the bit position of the data signal in a second direction; and
shifting the bit positions of the digital signal using a single logic core.

9. The method of Claim 8, wherein said directing step further comprises the step of flowing the digital signal through the logic core along the first path when shifting in said first direction and prohibiting flow along the second path when shifting the data bits in the first direction.

10. The method of Claim 8, wherein said directing step further comprises the steps of flowing the digital signal through the logic core along the second path when shifting the bit position in the second direction and prohibiting flow of the digital signal through the logic core along the first path when shifting the bit positions in the second direction.

11. The method of any of claims 8 to 10, further comprising the step of connecting the logic core to a output multiplexer device using two connections such that the first one of said two connections permits flow of the digital signal from the logic core when shifting the bit position in a first direction and the second one of the two connections permits digital signal flow from the logic core when shifting the bits position in the second direction.

12. The method of any of claims 8 to 11, wherein said digital signal comprises a stream of four-bit words and said shifting step further comprises the step of shifting the bit positions of the four bits in the four-bit word.

13. The method of any of claims 8 to 11, wherein said shifting step further comprises the step of shifting the digital signal by two bit positions in a single pass through the logic core.

14. The method of any of claim 8 to 13, further comprising the step of receiving the digital signal from the logic core in a multiplexer circuit from both the first path and the second path and producing a single selected output from the multiplexer.

15. A method for forming a barrel shifter for shifting the positions of bits in digital signal, comprising the steps of:
forming a logic core for shifting the bit position of the digital signal; and
forming circuitry for directing the digital signal through the logic core along a first path for shifting the bit position of the digital signal in a first direction and further for directing the digital signal through the logic core along second path for shifting the bit position of the digital signal in a second direction.

16. The method of Claim 15, wherein said directing circuitry forming step further comprises the step of forming input circuitry that permits flow of digital signal along said first path to said logic core when shifting the bit position of digital signal in said first direction and that prohibits flow to said logic core along said second path when shifting the signals in said first direction.

17. The method of Claim 15, wherein said directing circuitry forming step further comprises the step of forming input circuitry that permits flow of digital signal along with second path to said logic core when shifting the bit positions of the digital signal in said second direction and that prohibits flow of digital signal to said logic core along said first path when shifting the bit positions in said second direction.

18. The method of any of claims 15 to 17, directing circuitry forming step further comprises the step of forming two connections to an output multiplexer device wherein a first one of said two connections permits output from said logic core when shifting the bit positions of the digital signal in said first direction and a second one of said two outputs permits flow from said logic core when shifting the bit position of the digital signal in said second direction.

19. The method of any of claims 15 to 18, wherein said logic core forming step comprises the step of forming a four-bit logic core for shifting data bit positions of a digital signal comprising a stream of four-bit words.

20. The method of any of claims 15 to 19, wherein said logic core forming step comprises the step of forming shift circuitry in said logic core for shifting two bits of a word having at least four data bits.
